# EUROPÄISCHE PATENTSCHRIFT

(11) **EP 3 781 460 B1**
(45) Veröffentlichungstag und Bekanntmachung des Hinweises auf die Patenterteilung: **28.06.2023**
(21) Anmeldenummer: 19723008.9
(22) Anmeldetag: 25.03.2019
(51) Int. Cl.: B62D 21/14, B62D 65/18

(54) **FAHRERLOSES BODENFAHRZEUG ZUR FÖRDERUNG VON LASTEN WIE FAHRZEUGKAROSSERIEN ODER/UND FAHRZEUGTEILEN SOWIE VERFAHREN ZUM TRANSPORTIEREN EINER SOLCHEN LAST**
DRIVERLESS GROUND VEHICLE FOR CONVEYING LOADS SUCH AS VEHICLE BODIES OR/AND VEHICLE PARTS, AND METHOD FOR TRANSPORTING SUCH A LOAD
VÉHICULE TERRESTRE SANS CONDUCTEUR SERVANT AU CONVOYAGE DE CHARGES TELLES QUE DES CARROSSERIES DE VÉHICULE ET/OU PIÈCES DE VÉHICULE AINSI QUE PROCÉDÉ DE TRANSPORT D'UNE CHARGE DE CE TYPE

(30) Priorität: 19.04.2018 DE 102018109449
(43) Veröffentlichungstag der Anmeldung: 24.02.2021
(73) Patentinhaber: Eisenmann GmbH, 71032 Böblingen (DE)
(72) Erfinder: STOLZ, Uwe, 72074 Tübingen (DE)
(74) Vertreter: Ostertag & Partner Patentanwälte mbB
(86) Internationale Anmeldenummer: PCT/EP2019/057442
(87) Internationale Veröffentlichungsnummer: WO 2019/201560

(56) Entgegenhaltungen:
- DE-A1-102014 009 036
- FR-A1- 3 036 349
- US-A1- 2012 146 274
- US-A1- 2017 369 100

## Beschreibung

### HINTERGRUND DER ERFINDUNG

### 1. Gebiet der Erfindung

Die Erfindung betrifft ein fahrerloses Bodenfahrzeug zur Förderung von Lasten wie Fahrzeugkarosserien oder/und Fahrzeugteilen, mit einem Fahrzeugkörper und mit Aufnahmepunkten zur Aufnahme einer Last wie einer Fahrzeugkarosserie oder/und Fahrzeugteilen, wobei eine Anzahl an Aufnahmepunkten an dem Fahrzeugkörper angeordnet ist, sowie ein Verfahren zum Transportieren einer Last wie einer Fahrzeugkarosserie oder/und Fahrzeugteilen mit einem solchen fahrerlosen Bodenfahrzeug.

### 2. Beschreibung des Standes der Technik

Es sind fahrerlose, auf dem Boden schienenlos fahrende Transportfahrzeuge entsprechend den einleitend genannten Bodenfahrzeugen beispielsweise im Karosserierohbau, in der Fahrzeuglackierung oder in der Fahrzeugmontage bekannt, die für den Transport von Werkstücken unterschiedlicher Größe verschiedene Möglichkeiten bieten. Beispielsweise ist entsprechend den verschiedenen Werkstückabmessungen und -konfigurationen eine entsprechende Anzahl an Aufnahmepunkten oder -vorrichtungen vorgesehen. Dies kann im Extremfall bedeuten, dass für jeden Werkstücktyp oder/und jede Werkstückkonfiguration eine separate Aufnahmepunktkonfiguration vorgesehen ist. Dies erfordert einen unerwünscht hohen Konstruktionsaufwand, zudem stören nicht nutzbare Aufnahmepunkte bei der Verwendung eines solchen Transportfahrzeugs.

Die Druckschrift DE 10 2014 009 036 A1 beschreibt ein Transportfahrzeug, das ein Fahrwerk mit mindestens zwei nebeneinander und beabstandet zueinander angeordneten Lastträgern aufweist, deren gegenseitiger Abstand zur Veränderung der Breite des Transportfahrzeugs veränderbar ist.

Die Druckschrift US 2017/0369 100 A1 beschreibt ein autonom fahrendes Fahrzeug, welches vier Räder aufweist, die links und rechts mittels eines Riemens antriebsmäßig verbunden sind. Die Vorderräder sind über Antriebsgetriebe unabhängig voneinander antreibbar.

### ZUSAMMENFASSUNG DER ERFINDUNG

Es ist eine Aufgabe der Erfindung, ein Transportfahrzeug sowie ein Verfahren zum Transportieren der eingangs genannten Art für die genannten Zwecke wie beispielsweise bei Karosserierohbau, Fahrzeuglackierung oder/und Fahrzeugmontage anzugeben, welche die genannten Nachteile vermeiden und insbesondere die Möglichkeit bieten, Lasten unterschiedlicher Größe oder/und Konfiguration aufzunehmen, ohne dass für jede Größe oder/und Konfiguration eine separate Aufnahmepunktkonfiguration vorgehalten werden muss.

Diese Aufgabe wird durch ein fahrerloses Bodenfahrzeug zur Förderung von Lasten wie Fahrzeugkarosserien oder/und Fahrzeugteilen gemäß dem unabhängigen Anspruch 1 sowie durch ein Verfahren zum Transportieren einer Last wie einer Fahrzeugkarosserie oder/und Fahrzeugteilen gemäß dem unabhängigen Anspruch 10 gelöst.

Das erfindungsgemäße Bodenfahrzeug weist einen Fahrzeugkörper mit einer ersten Achse und einer zweiten Achse auf, wobei zumindest eine Achse antreibbar ist. Das Bodenfahrzeug nimmt also über die Achsen und daran befindlichen Rädern oder Ketten Kontakt mit dem Boden auf. Es können mindestens drei Räder, vorteilhafterweise vier Räder vorgesehen sein. Des Weiteren weist das Bodenfahrzeug Aufnahmepunkte zur Aufnahme einer Last wie etwa einer Fahrzeugkarosserie oder/und eines oder mehrerer Fahrzeugteile auf, wobei eine erste Anzahl an Aufnahmepunkten in einem ersten Bereich des Fahrzeugkörpers und eine zweite Anzahl an Aufnahmepunkten in einem zweiten Bereich des Fahrzeugkörpers angeordnet ist. Der Abstand der ersten Anzahl an Aufnahmepunkten zu der zweiten Anzahl an Aufnahmepunkten ist verstellbar.

Bei der ersten oder/und der zweiten Anzahl an Aufnahmepunkten kann es sich beispielsweise um insgesamt drei oder vier Aufnahmepunkte handeln. So kann beispielsweise die erste Anzahl einen einzigen Aufnahmepunkt und die zweite Anzahl zwei Aufnahmepunkte umfassen. Bei den Aufnahmepunkten muss es sich nicht notwendigerweise um Punkte im geometrischen Sinne handeln. Vielmehr sollen jegliche Arten von Lastaufnahmen wie Aufnahmeschienen, Aufnahmegurte, Auflagerflächen, etc. umfasst sein. Entsprechend kann auch lediglich jeweils ein Auflagepunkt an dem ersten und dem zweiten Fahrzeugkörper vorhanden sein, wenn es sich beispielsweise um zwei Aufnahmeschienen handelt.

Es können nur die erste, nur die zweite Achse oder beiden Achsen gleichzeitig antreibbar sein. Gleiches gilt für eine Lenkbarkeit der Achsen. Die Achsen weisen Räder für einen Kontakt mit dem Boden auf. Es können ein oder zwei Räderje Achse vorgesehen sein, insgesamt sind mindestens drei Räder für einen ausreichenden Bodenkontakt vorzusehen.

Die Verstellbarkeit der Aufnahmepunkte zueinander erlaubt eine Anpassung der Lage der verschiedenen Aufnahmepunkte an die entsprechenden Gegebenheiten der jeweils zu fördernden Last, so dass die Anzahl an vorzuhaltenden Aufnahmepunkten deutlich reduziert werden kann bei gleichbleibender oder höherer Flexibilität.

Bei einer Ausführungsform ist vorgesehen, dass der Fahrzeugkörper einen ersten Fahrzeugkörper mit der ersten Achse und einen zweiten Fahrzeugkörper mit der zweiten Achse aufweist, wobei der erste Fahrzeugkörper mit dem zweiten Fahrzeugkörper über eine Kopplungseinrichtung verbunden ist.

Die Kopplungsvorrichtung kann dabei einerseits eine mechanische Verbindung zur Übertragung von Zug-, Schubkräften und/oder anderen mechanischen (Seiten-) Kräften ermöglichen.

Andererseits kann gleichzeitig oder alternativ eine Übertragung von Informationen oder/und von Energie zwischen dem ersten Fahrzeugkörper und dem zweiten Fahrzeugkörper erfolgen. Es kann also beispielsweise eine Anbindung des zweiten Fahrzeugkörpers an den ersten Fahrzeugkörper rein über eine informationsübertragende Leitung, die beispielsweise auch ausschließlich über eine drahtlose Verbindung realisiert sein kann, erfolgen.

In diesem Zusammenhang kann es vorteilhaft sein, wenn die Verbindung zwischen dem ersten Fahrzeugkörper und dem zweiten Fahrzeugkörper im Betrieb starr ist. Es kann somit über eine mechanisch starre oder steife Verbindung einerseits außerhalb des eigentlichen Transportbetriebs des Bodenfahrzeugs eine Verstellung und damit beispielsweise eine Anpassung des Abstands der ersten Anzahl an Aufnahmepunkten zu der zweiten Anzahl an Aufnahmepunkten erfolgen und andererseits im Betrieb eine starre Verbindung zur Aufnahme von auftretenden Kräften realisiert werden.

Dabei kann es vorteilhaft sein, wenn die erste Anzahl an Aufnahmepunkten an dem ersten Fahrzeugkörper und die zweite Anzahl an Aufnahmepunkten an dem zweiten Fahrzeugkörper angeordnet ist.

Bei einer bevorzugten Ausführungsform ist der Abstand der ersten Anzahl an Aufnahmepunkten zu der zweiten Anzahl an Aufnahmepunkten durch eine Verstellbarkeit des Abstands des ersten Fahrzeugkörpers zu dem zweiten Fahrzeugkörper verstellbar. Auf diese Weise können die eine Last aufnehmenden Aufnahmepunkte in der Nähe der jeweiligen die Last auf den Boden abtragenden Achse angeordnet werden. Mittels der Verstellbarkeit der Fahrzeugkörper zueinander kann erreicht werden, dass unabhängig von den Abmessungen der zu fördernden Last die von einem Aufnahmepunkt zu tragende Last stets möglichst nahe im Bereich der jeweiligen Achse auf das Bodenfahrzeug einwirkt. Dies ermöglicht eine Reduzierung von möglicherweise auftretenden Biegemomenten auf das Bodenfahrzeug. Somit kann das gesamte Bodenfahrzeug insgesamt weniger aufwändig hinsichtlich der Gesamtsteifigkeit und damit auch leichter ausgeführt werden, was insbesondere bei batteriebetriebenen Bodenfahrzeugen einen Vorteil darstellt.

Bei einer Ausführungsform wird die Gesamtlänge oder/und die Gesamtbreite des Bodenfahrzeugs bezüglich einer Förderrichtung durch den Abstand des ersten Fahrzeugkörpers von dem zweiten Fahrzeugkörper bestimmt. Es können also durch die Verstellbarkeit der beiden Fahrzeugkörper zueinander die Außenabmessungen des Bodenfahrzeugs verstellt bzw. eingestellt werden. Dies kann einerseits für eine optimierte Positionierung der Aufnahmepunkte hinsichtlich der Tragfähigkeit der Last eingesetzt werden und kann andererseits bei der Einnahme einer Parkstellung vorteilhaft ausgenutzt werden. Für die Einnahme einer Parkstellung kann der Abstand der beiden Fahrzeugkörper zueinander minimiert werden und so die Gesamtabmessungen des Bodenfahrzeugs auf ein Minimum verkleinert werden. Dies kann den Platzbedarf beispielsweise bei Ladevorgängen oder anderen Wartungsvorgängen reduzieren.

Bei einer Weiterbildung der Erfindung ist die Kopplungsvorrichtung so verstellbar ausgestaltet, dass mittels eines Verstellens der Kopplungsvorrichtung der Abstand zwischen dem ersten und dem zweiten Fahrzeugkörper verstellbar ist. Somit kann einerseits durch die starre Ausführung der Kopplungsvorrichtung eine Übertragung von Kräften von dem Bodenfahrzeug auf die zu transportierende Last insbesondere bei dem Auftreten von Beschleunigungen niedrig gehalten werden. Andererseits kann durch die Verstellbarkeit der Kopplungsvorrichtung ein einfaches Einstellen des Abstands zwischen den Fahrzeugkörpern realisiert werden.

In diesem Zusammenhang kann die Kopplungsvorrichtung ein oder mehrere teleskopartig ineinander greifende Elemente oder/und scherenförmige Verstellelemente aufweisen. Die teleskopartigen Elemente können beispielsweise in Förderrichtung ausgerichtet sein und so den Abstand zwischen dem ersten - beispielsweise in Förderrichtung vorderen - Fahrzeugkörper und dem zweiten - beispielsweise in Förderrichtung hinteren - Fahrzeugkörper verstellbar gestalten.

Das Verstellen kann bei einer Ausführungsform elektrisch, pneumatisch, elektropneumatisch, mechanisch, hydraulisch oder/und elektrohydraulisch durchführbar ausgestaltet sein.

Bei einer konkreten Ausführungsform des erfindungsgemäßen Bodenfahrzeugs legt die erste oder die zweite Anzahl an Aufnahmepunkten die Last hinsichtlich horizontaler Kräfte relativ zu dem Bodenfahrzeug fest. Nachdem bei den zu transportierenden Lasten in der Regel hinsichtlich der Aufnahmepunkte Toleranzen zu beachten sind, sollte vorteilhafterweise nur bei dem/den ersten oder dem/den zweiten Aufnahmepunkten ein genaues Festlegen der Last relativ zu dem Bodenfahrzeug erfolgen. Die jeweils anderen Aufnahmepunkte können dann beispielsweise als Langlochaufnahme oder ähnlich ausgeführt werden, um eventuelle Toleranzen auszugleichen.

In ähnlicher Weise kann vorgesehen sein, dass insgesamt mindestens zwei von mindestens drei Aufnahmepunkten für eine Lagefixierung der Last relativ zu dem Bodenfahrzeug und die restlichen Aufnahmepunkte für eine reine Stützfunktion ausgelegt sind. Dabei können die zwei Aufnahmepunkte für die Lastfixierung wahlweise der ersten Anzahl an Aufnahmepunkten, der zweiten Anzahl an Aufnahmepunkten oder beiden zugeordnet sein. Die Last wird mittels der lagefixierenden Aufnahmepunkte vorrangig hinsichtlich ihrer relativen Lage zu dem Fahrzeugkörper hinsichtlich Beschleunigungen parallel zu der Bodenebene, auf der sich das Bodenfahrzeug bewegt, fixiert. Die weiteren Aufnahmepunkte können lediglich Stützfunktion aufweisen, um die Last auf dem Fahrzeugkörper abzustützen. Gegebenenfalls können die weiteren Aufnahmepunkte Kräfte nur in bestimmten Richtungen aufnehmen wie beispielsweise Anschlagschienen, -stifte oder ähnliches.

Das erfindungsgemäße Bodenfahrzeug kann als omnidirektional bewegliches Bodenfahrzeug ausgelegt sein, d.h. es kann sich mit und ohne Last in beliebige Richtungen unabhängig von seiner momentanen Ausrichtung bewegen.

Des Weiteren kann das Bodenfahrzeug mit einer Wegfindungseinrichtung ausgerüstet sein. Es kann also beispielsweise unter bestimmten Voraussetzungen ohne aktiven Fahrereingriff bestimmte Ziele anfahren und eine Last transportieren. Die Wegfindungseinrichtung kann beispielsweise optische, akustische oder/und Strahlungsensoren, Strahlungsquellen beispielsweise für Licht, andere elektromagnetische Strahlung oder/und Schallwellen aufweisen.

Entsprechend kann das Bodenfahrzeug mit Sicherheitselementen zur Vermeidung von Kollisionen und zur Vermeidung einer Personengefährung ausgestattet sein. Bei den Sicherheitselementen kann es sich beispielsweise um Einrichtungen wie Kameras, Laser, Laserscanner, etc. oder um andere Abstandserfassungseinrichtungen wie Ultraschall, Radar, etc. handeln.

Es ist vorgesehen, dass das erfindungsgemäße Bodenfahrzeug so ausgelegt ist, dass es sich selbsttätig unter der zu fördernden Last positionieren kann und die Aufnahmepunkte zu einem Zusammenwirken mit Angriffspunkten an der zu fördernden Last bringen kann. Zu diesem Zweck kann es beispielsweise vorgesehen sein, dass die Aufnahmepunkte anhebbar - beispielsweise durch ein Anheben des Fahrzeugkörpers oder Teilen davon - ausgestaltet sind und damit die Last anheben können oder dass die Last auf das Bodenfahrzeug bzw. dessen Aufnahmepunkte absenkbar ist.

Das erfindungsgemäße Verfahren zum Transportieren einer Last wie einer Fahrzeugkarosserie oder/und Fahrzeugteilen mittels eines fahrerlosen Bodenfahrzeugs weist die Schritte auf: Bestimmen der Abmessungen der Last; Anpassen des Abstands der Aufnahmepunkte des Bodenfahrzeugs an die Abmessungen der Last, sofern erforderlich; und Aufnehmen der Last. Das Bestimmen der Abmessungen der Last kann direkt vor dem Aufnahmevorgang der Last erfolgen, kann aber auch völlig separiert davon erfolgen. Beispielsweise können die Abmessungen der Last beziehungsweise der Punkte der Last, an denen eine Aufnahme durch ein Bodenfahrzeug erfolgen kann, aus Fertigungsdaten bekannt sein. Insofern erfolgt ein Bestimmen der Abmessungen der Last dahingehend, dass eine Überprüfung stattfindet, ob der momentan eingestellte Abstand zwischen der ersten Anzahl an Aufnahmepunkten und der zweiten Anzahl an Aufnahmepunkten zu dem Abstand der Stellen passt, an denen die Aufnahmepunkte mit der Last in Interaktion treten werden.

### KURZE BESCHREIBUNG DER ZEICHNUNGEN

Nachfolgend werden Ausführungsbeispiele der Erfindung anhand der Zeichnungen näher erläutert. In diesen zeigen:
- Figur 1: eine erste Ausführungsform eines fahrerlosen Bodenfahrzeugs in einer ersten Konfiguration;
- Figur 2: die Ausführungsform der Figur 1 in einer zweiten Konfiguration;
- Figur 3: eine zweite Ausführungsform eines erfindungsgemäßen fahrerlosen Bodenfahrzeugs;
- Figur 4: eine dritte Ausführungsform eines erfindungsgemäßen Bodenfahrzeugs;
- Figur 5: die Ausführungsform der Figuren 1 und 2 mit einer ersten Last;
- Figur 6: die Ausführungsform der Figuren 1 und 2 mit einer zweiten, kürzeren Last;
- Figur 7: eine vierte Ausführungsform eines erfindungsgemäßen Bodenfahrzeugs in einer ersten Konfiguration;
- Figur 8: die vierte Ausführungsform der Figur 7 in einer zweiten Konfiguration;
- Figur 9: eine fünfte Ausführungsform eines erfindungsgemäßen Bodenfahrzeugs in einer ersten Konfiguration;
- Figur 10: die fünfte Ausführungsform der Figur 9 in einer zweiten Konfiguration; und
- Figur 11: ein Ablaufdiagramm eines erfindungsgemäßen Verfahrens.

### BESCHREIBUNG BEVORZUGTER AUSFÜHRUNGSBEISPIELE

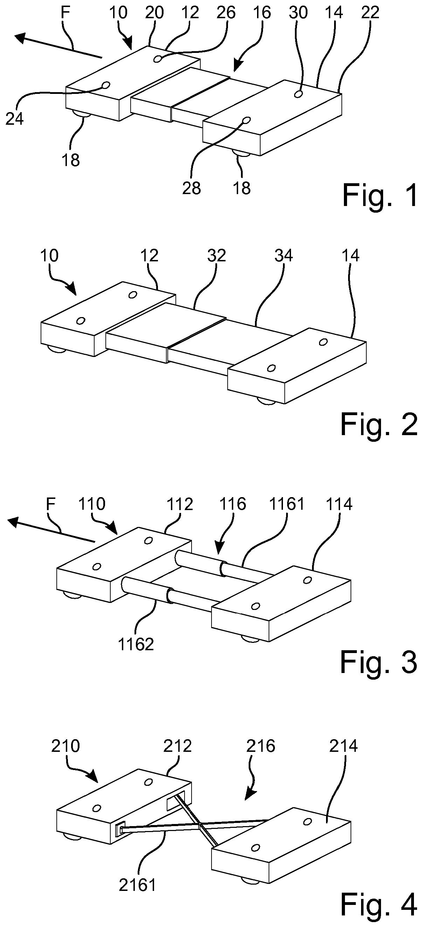

Die Figuren 1 und 2 zeigen eine erste erfindungsgemäße Ausführungsform eines fahrerlosen Bodenfahrzeugs 10 in einer ersten (Figur 1) und einer zweiten (Figur 2) Konfiguration. Das Bodenfahrzeug 10 ist beispielsweise für einen Transport von Fahrzeugkarosserien im Karosserierohbau, in der Fahrzeuglackierung und in der Fahrzeugmontage einsetzbar, wobei eine Karosserie auch unterschiedliche Einsatzbereiche ohne einen Wechsel des Bodenfahrzeugs durchlaufen kann. Das Bodenfahrzeug 10 weist einen ersten Fahrzeugkörper 12 und einen zweiten Fahrzeugkörper 14 auf. Die beiden Fahrzeugkörper 12, 14 sind in Fahrtrichtung (Pfeil F) bzw. entlang einer Längsachse des Bodenfahrzeugs 10 hintereinander angeordnet und über eine Koppelvorrichtung 16 miteinander verbunden. Jeder Fahrzeugkörper 12, 14 weist eine Achse (nicht dargestellt) mit jeweils zwei Bodenrollen 18 auf. Zumindest eine der beiden Achsen ist antreibbar, beispielsweise elektrisch, und zumindest eine der beiden Achsen ist lenkbar. Bei einer bevorzugten Ausführungsform sind beide Achsen antreibbar und lenkbar.

Achse und Bodenrollen 18 sind bei jedem Fahrzeugkörper 12, 14 von einem Gehäuse 20, 22 umgeben, das auch Antriebs- und Steuerungskomponenten beinhalten kann. Beispielsweise kann eine Antriebsbatterie, ein Antriebsmotor sowie eine Steuer-/Sende- und Empfangseinheit in dem Gehäuse 20, 22 untergebracht sein. Dabei kann vorgesehen sein, dass bestimmte Komponenten wie beispielsweise Antriebsbatterie oder/und Steuerungseinheiten nur in jeweils einem Fahrzeugkörper 12, 14 untergebracht sind und entsprechende Leitungen für Energie oder/und Signale zwischen den Fahrzeugkörpern 12, 14 vorgesehen sind.

An dem Gehäuse 20 des ersten Fahrzeugkörpers 12 ist eine erste Anzahl an Aufnahmepunkten 24, 26 angeordnet. An dem Gehäuse 22 des zweiten Fahrzeugkörpers 14 ist eine zweite Anzahl an Aufnahmepunkten 28, 30 angeordnet. Bei der in den Figuren 1, 2 dargestellten Ausführungsform umfasst die erste Anzahl an Aufnahmepunkten und die zweite Anzahl an Aufnahmepunkten jeweils zwei.

Bei der gezeigten Ausführungsform sind die Aufnahmepunkte 24-30 als einfache Sacklöcher ausgebildet. In diese können beispielsweise Stifte der zu transportierenden Last eingreifen. Selbstverständlich können auch umgekehrt die Aufnahmepunkte als Stifte und die entsprechenden Auflagerpunkte der Last als Löcher oder Durchführungen ausgebildet sein.

Die erste Anzahl an Aufnahmepunkten 24, 26 ist im Wesentlichen entlang einer Gerade angeordnet, die senkrecht zur Förderrichtung ausgerichtet ist. Das Gleiche gilt für die zweite Anzahl an Aufnahmepunkten 28, 30 des zweiten Fahrzeugkörpers 14. Selbstverständlich ist dies lediglich als Ausführungsbeispiel zu verstehen. Jede andere Anordnung von Aufnahmepunkten, die für die aufzunehmende Last geeignet ist, kann realisiert werden. In den Figuren 1 und 2 nicht explizit dargestellt ist die Möglichkeit, beispielsweise die zweite Anzahl an Aufnahmepunkten 28, 30 als Langlöcher auszugestalten, d.h. für die Aufnahme von Stiften der Last eine Toleranz vorzusehen.

Die Koppelvorrichtung 16, welche den ersten Fahrzeugkörper 12 mit dem zweiten Fahrzeugkörper 14 starr verbindet, ist in dem in den Figuren 1 und 2 gezeigten Ausführungsbeispiel entlang der Fördererrichtung F bzw. der Längsachse des Bodenfahrzeugs 10 verstellbar ausgestaltet. Entsprechend dieser Verstellbarkeit sind in der Figur 1 eine erste Konfiguration mit einem ersten Abstand zwischen dem ersten Fahrzeugkörper 12 und dem zweiten Fahrzeugkörper 14 und in Figur 2 eine zweite Konfiguration gezeigt, bei der der Abstand zwischen dem ersten Fahrzeugkörper 12 und dem zweiten Fahrzeugkörper 14 vergrößert ist.

Die Kopplungsvorrichtung 16 weist in der dargestellten Ausführungsform ein erstes Verstellelement 32 und ein zweites Verstellelement 34 auf. Die beiden Verstellelemente 32, 34 sind ineinander schiebbar ausgestaltet. Die eigentliche Verschiebung bzw. Verstellung der beiden Verstellelemente 32, 34 geschieht bei der in den Figuren 1 und 2 gezeigten Ausführungsform motorisch. Die Ausgestaltung der Kopplungsvorrichtung 16 kann entsprechend den Anforderungen an die Steifigkeit und Verstellbarkeit des Bodenfahrzeugs 10 angepasst werden. Alternative Ausführungen für die Kopplungsvorrichtung 16 sind in den Figuren 3 und 4 dargestellt:

Figur 3 veranschaulicht eine alternative Ausführungsform eines Bodenfahrzeugs. Bezüglich der zuvor beschriebenen Ausführungsform der Figuren 1 und 2 werden gleiche oder vergleichbare Merkmale mit Bezugszeichen versehen, zu denen 100 addiert wurde. Das Bodenfahrzeug 110 der Figur 3 weist ebenfalls zwei Fahrzeugkörper 112, 114 auf, die über eine Kopplungsvorrichtung 116 miteinander verbunden sind. Die Kopplungsvorrichtung 116 ist bei dem Bodenfahrzeug 110 in Richtung der Längsachse zweiteilig ausgebildet und weist entsprechend ein erstes Kopplungselement 1161 und ein zweites Kopplungselement 1162 auf. Die Kopplungselemente 1161, 1162 sind in sich selbst wiederum mit ineinander verschiebbaren Elementen versehen und erlauben eine Verlängerung/Verkürzung der Gesamtlänge des Bodenfahrzeugs 110 entlang der Längsachse des Fahrzeugs bzw. entlang der Fahrtrichtung F.

Figur 4 zeigt eine weitere Abwandlung 210 eines Bodenfahrzeugs. Wiederum sind gleiche oder vergleichbare Merkmale mit Bezugszeichen versehen, zu denen abermals 100 addiert wurde. Bei dieser Ausführungsform eines Bodenfahrzeugs 210 sind der erste Fahrzeugkörper 212 und der zweite Fahrzeugkörper 214 über eine Kontaktvorrichtung 216 miteinander verbunden, die als Scherengestänge 2161 ausgebildet sind. Mittels des Scherengestänges 2161 kann ebenfalls der Abstand zwischen dem ersten Fahrzeugkörper 212 und dem zweiten Fahrzeugkörper 214 verringert oder vergrößert werden. Gleichzeitig gibt das Scherengestänge 2161 dem Bodenfahrzeug 210 die notwendige Gesamtstabilität.

Bei den in den Figuren 1-4 gezeigten Ausführungsformen ist die Verstellbarkeit entlang der Längsachse und somit in Förderrichtung gegeben. Alternativ oder zusätzlich kann die Verstellbarkeit auch entlang einer Achse quer zur Förderrichtung erfolgen.

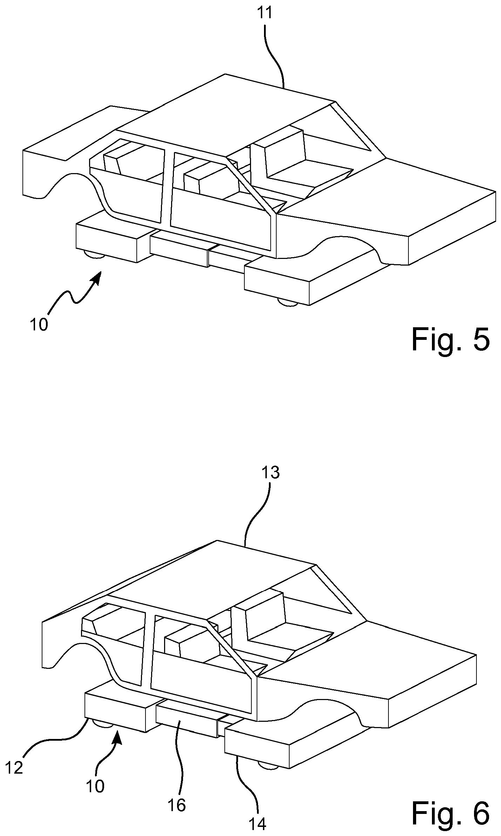

Figur 5 zeigt die Ausführungsform eines Bodenfahrzeugs 10 der Figuren 1 und 2 mit einer Last, die im Falle der Figur 5 eine Fahrzeugkarosserie 11 ist. Die Fahrzeugkarosserie 11 weist an ihrer Unterseite mit den Aufnahmepunkten (in Figur 5 nicht abgebildet) zusammenwirkende Auflagerpunkte auf. Diese können beispielsweise als Stifte oder als Aussparungen beispielsweise in Form von kreisförmigen, elliptischen oder anders geformten Löchern ausgebildet sein. Die Karosserie 11 liegt somit direkt auf dem Bodenfahrzeug 10 an den vorgesehenen Aufnahmepunkten 24-30 auf und kann ohne einen sonst üblicherweise verwendeten Skid gefördert werden.

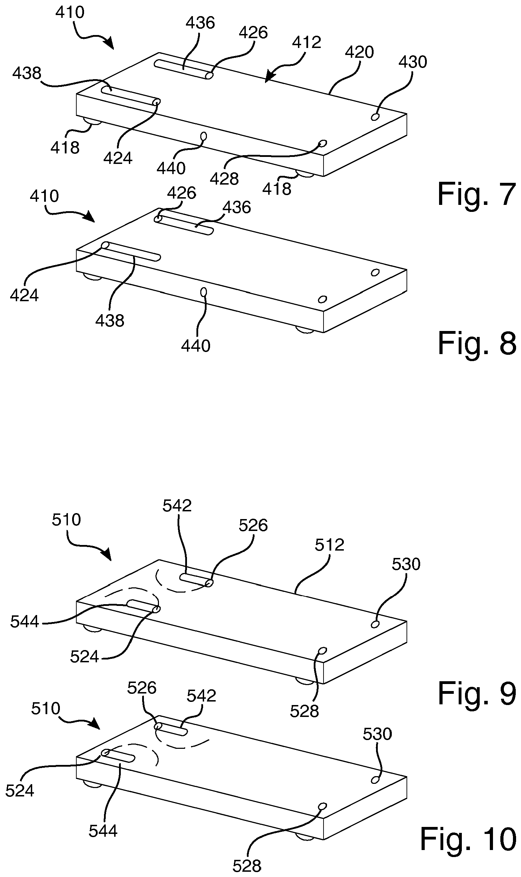

In Figur 6 ist das Bodenfahrzeug 10 der Figur 5 in einer anderen Konfiguration gezeigt. Bei der Konfiguration der Figur 8 wird von dem gleichen Bodenfahrzeug 10 eine kürzere Fahrzeugkarosserie 13 gefördert. Auch die Fahrzeugkarosserie 13 weist entsprechend mit den Aufnahmepunkten 24-30 des Bodenfahrzeugs 10 zusammenwirkende Auflagerpunkte (nicht abgebildet) auf. Da die Fahrzeugkarosserie 13 insgesamt kürzer ist und entsprechend auch die vorderen Auflagerpunkte der Fahrzeugkarosserie einen anderen Abstand zu den hinteren Auflagerpunkten aufweisen, sind bei der in der Figur 6 gezeigten Konfiguration der erste Fahrzeugkörper 12 und der zweite Fahrzeugkörper 14 mittels der Kopplungseinrichtung 16 näher aneinander gefahren. Durch diese Verstellung gelangen die Auflagerpunkte der Fahrzeugkarosserie 13 wiederum an den dafür vorgesehenen optimalen Stellen, nämlich den Aufnahmepunkten 24-30, des Bodenfahrzeugs 10, zu liegen und die entstehende Last kann in optimierter Weise abgetragen werden.

Die Figuren 7 und 8 veranschaulichen in einer weiteren alternativen Ausführungsform ein erfindungsgemäßes fahrerloses Bodenfahrzeug 410. Bezüglich der zuvor beschriebenen Ausführungsform der Figur 4 werden gleiche oder vergleichbare Merkmalen mit Bezugszeichen versehen, zu denen 200 addiert wurde. Das Bodenfahrzeug 410 der Figuren 7 und 8 weist einen einzigen Fahrzeugkörper 412 auf, an dem zwei Achsen (nicht abgebildet) mit jeweils zwei Rädern 418 angebracht sind. Ein Gehäuse 420 umgibt die Achsen und den Fahrzeugkörper 412. Eine erste Anzahl an Aufnahmepunkten 424, 426 - nämlich zwei - ist oberhalb einer ersten Achse angeordnet, eine zweite Anzahl an Aufnahmepunkten 428, 430 - ebenfalls zwei - ist oberhalb einer zweiten Achse ebenfalls an einer Oberseite des Gehäuses 420 angeordnet.

Wie bereits vorstehend erläutert ist die Ausgestaltung der Aufnahmepunkte 424-430 an sich von der Art der Last und der gewünschten Funktion des Aufnahmepunktes - Lagefixierung oder Stützfunktion - abhängig und wird hier nicht näher erläutert.

Die erste Anzahl an Aufnahmepunkten 424, 426 ist beweglich relativ zu dem Fahrzeugkörper 412 angeordnet. Zu diesem Zweck sind Verstellschienen 436, 438 an der Oberseite des Gehäuses 420 angeordnet, in denen die Aufnahmepunkte 424, 426 verfahren werden können. Die Verstellung kann innerhalb beider Verstellschienen 436, 438 gleichzeitig durchgeführt werden. Es ist aber auch je nach aufzunehmender Last denkbar, dass nur ein Aufnahmepunkt oder beide Aufnahmepunkte 424, 426 unterschiedlich weit verstellbar ausgelegt sind.

Fig. 7 veranschaulicht die Aufnahmepunkte 424, 426 innerhalb der Verstellschienen 436, 438 in einer Position, in der die ersten Aufnahmepunkte 424, 426 einen minimalen Abstand zu den zweiten Aufnahmepunkten 428 ,430 aufweisen. In Figur 8 hingegen befinden sich die verstellbaren Aufnahmepunkte 424, 426 in einer Position, in welcher der Abstand der verstellbaren Aufnahmepunkte 424, 426 zu den festen Aufnahmepunkten 428, 430 maximiert ist. Die Verstellung der Aufnahmepunkte 424, 426 kann kontinuierlich oder in Stufen vornehmbar sein. Dies gilt hier als auch für die vorstehend und nachfolgend beschriebenen Ausführungsformen.

Die Verstellung der Aufnahmepunkte 424, 426 kann bei der Ausführungsform der Figuren 7, 8 durch einen externen Verstellantrieb erfolgen, der an einer Schnittstelle 440 angreifen kann. Die Schnittstelle 440 kann bei einer beispielhaften Ausführungsform als Schraubaufnahme ausgebildet sein, welche eine Drehbewegung beispielsweise mittels einer Spindel an die Aufnahmepunkte 424, 426 oder/und die Verstellschienen 436, 438 weitergibt. Die über die Schnittstelle 440 übertragene Kraft kann beispielsweise manuell oder mittels eines externen Antriebs aufgebracht werden.

Die Figuren 9 und 10 zeigen eine weitere alternative Ausführungsform eines mit einem einteiligen Fahrzeugkörpers 512 aufgebauten Bodenfahrzeugs 510. Bezüglich der zuvor beschriebenen Ausführungsform der Figuren 7, 8 werden gleiche oder vergleichbare Merkmalen mit Bezugszeichen versehen, zu denen 100 addiert wurde. Im Unterschied zu der vorstehend beschriebenen Ausführungsform ist die Verstellung der ersten Anzahl an Aufnahmepunkten 524, 526 nicht als lineare Beweglichkeit entlang einer Verstellschiene, sondern mittels einer Drehbewegung gelöst. Zu diesem Zweck sind die Aufnahmepunkte 524, 526 des Bodenfahrzeugs 510jeweils auf einem Dreharm 542, 544 angeordnet, der um einen an dem Fahrzeugkörper 512 angeordneten Drehpunkt verschwenkbar ist.

Figur 9 zeigt eine erste Stellung der Dreharme 542, 544, in der die verstellbaren Aufnahmepunkte 524, 526 einen minimalen Abstand zu den fixierten Aufnahmepunkten 528, 530 aufweisen. Figur 10 zeigt eine zweite Stellung der Dreharme 542, 544, in welcher die Aufnahmepunkte 524, 526 einen maximalen Abstand zu den fixierten Aufnahmepunkten 528, 530 einnehmen. Je nach Ausgestaltung der Angriffspunkte an der Last, mit welcher die Aufnahmepunkte 524, 526 zusammenwirken, können auch Zwischenstellungen der Dreharme 542, 544 sinnvoll und entsprechend auch einstellbar sein.

Neben der Verstellung der Gesamtlänge des Bodenfahrzeugs 10 ist es bei einer weiteren Ausführungsform alternativ oder zusätzlich auch möglich, die Gesamtbreite des Bodenfahrzeugs zu verstellen. Durch die Verstellbarkeit kann sich zumindest ein Abstand zweier zueinander beanstandeter Antriebs- oder/und Laufräder zueinander ändern. Die Verstellbarkeit kann manuell oder motorisch erfolgen. Eine motorische Verstellung kann in allen beschriebenen Ausführungsformen über einen externen Antrieb - auch manuell - oder über einen in dem Bodenfahrzeug vorgesehenen Antrieb erfolgen. Der externe Antrieb kann beispielsweise auch stationär in dem Sinne vorgesehen sein, dass sich das Bodenfahrzeug für eine Verstellung zu dem stationären Antrieb bewegt und die Verstellung dort an dem stationären Antrieb vorgenommen wird. Es kann eine stufenlose oder in vorgegebenen Abständen erfolgende Verstellbarkeit vorgesehen sein.

Durch die Verstellbarkeit kann der Platzbedarf eines unbeladenen Bodenförderfahrzeugs gegenüber einem beladenen Förderfahrzeug verringert werden. Dies ermöglicht eine besonders platzsparende Aufbewahrung/Lagerung nicht benutzter oder in Wartung/elektrischer Aufladung befindlicher Bodenfahrzeuge.

Die Verstellbarkeit ermöglicht konstruktiv eine Reduzierung der Biegemomente auf die Fahrzeugkörper, da die Lastaufnahmepunkte für unterschiedliche Werkstücke in einem konstanten, kurzen Abstand zum Aufstandspunkt der Räder, idealerweise direkt darüber, liegen. Dadurch kann das gesamte Bodenfahrzeug mit weniger Materialaufwand gebaut werden. Dies führt gerade bei batteriebetriebenen Bodenfahrzeugen zu einer höheren Effizienz.

Als bewegliche Koppeleinheit können teleskopartig ineinandergreifende Elemente verwendet werden. Die mindestens zwei Fahrzeugkörper können weitgehend baugleich ausgeführt werden. Dies bedeutet Kostenvorteile. Energie- oder/und Datenleitungen können über die Kopplungsvorrichtung von einem Fahrzeugkörper zum anderen Fahrzeugkörper geführt werden.

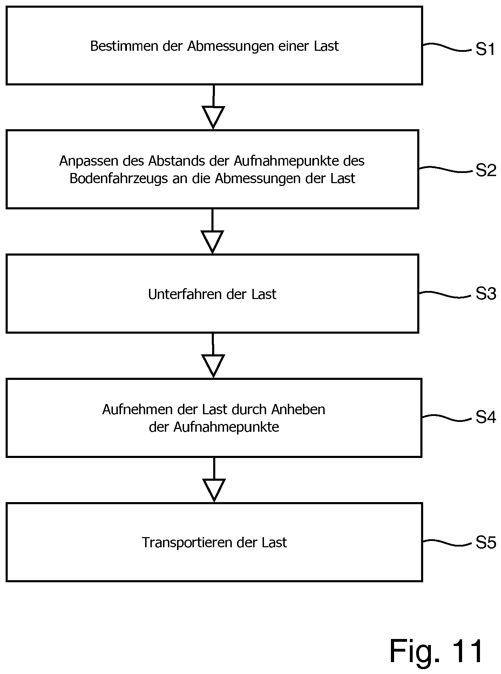

Figur 11 veranschaulicht ein erfindungsgemäßes Verfahren zum Transportieren einer Last wie beispielsweise einer Fahrzeugkarosserie oder/und Fahrzeugteilen mit einem Bodenfahrzeug wie vorstehend in einer der Ausführungsformen der Figuren 1-4 und 7-10 beschrieben. Gemäß dem erfindungsgemäßen Verfahren werden in einem ersten Schritt die Abmessungen einer Last bestimmt (S1). Dies kann beispielsweise durch ein direktes Abtasten der Last mittels eines optischen oder anderen Verfahrens durch das Bodenfahrzeug oder durch eine davon getrennte Einheit geschehen. Alternativ oder zusätzlich können die Abmessungen aus vorbekannten Fertigungsdaten ermittelt und dem Bodenfahrzeug zur Verfügung gestellt werden. Beispielsweise können derartige Daten an der zu transportierenden Last lesbar angebracht sein, beispielsweise mittels eines Barcodes oder eines RFID-Chips, oder über ein zentrales System dem Bodenfahrzeug übermittelt werden.

Bei den Abmessungen kann es sich ausschließlich um die Lage der Angriffspunkte handeln, an denen ein Zusammenwirken mit entsprechenden Aufnahmepunkten vorgesehen ist. Zusätzlich können Informationen über die Außenabmessungen bereitgestellt werden, falls dies für den Transport der Last durch das Bodenfahrzeug von Belang ist. Dabei kann es nützlich sein, wenn die Lage der Angriffspunkte relativ zu den Außenabmessungen als Information dem Bodenfahrzeug zur Verfügung gestellt wird.

In einem weiteren Schritt (S2) kann, falls dies erforderlich ist, der Abstand der Aufnahmepunkte des Bodenfahrzeugs an die Abmessungen der Last, insbesondere der Lage der zur Verfügung stehenden Angriffspunkte, angepasst werden. Dies hängt in der Regel davon ab, in welcher Konfiguration sich das Bodenfahrzeug momentan befindet, d.h., ob es in einem vorhergehenden Schritt bereits eine solche Last transportiert hat oder/und ob gegebenenfalls seine Aufnahmepunkte in eine neutrale Stellung gebracht worden sind.

Das Anpassen des Abstands der Aufnahmepunkte kann - wie erwähnt - mittels einer Verstellmöglichkeit innerhalb des Bodenfahrzeugs selbst oder über einen externen Antrieb erfolgen.

Der weitere Schritt (S3) eines Unterfahrens der Last kann dabei vor, gleichzeitig mit oder nach dem Schritt des Anpassens des Anstands der Aufnahmepunkte erfolgen.

Nach dem Unterfahren der Last (S3) und dem Anpassen des Abstands der Aufnahmepunkte (S2) kann die Last an das Bodenfahrzeug übergeben werden (S4). Dabei kann das Übergeben entweder über ein Auf-die-Last-Zubewegen der Aufnahmepunkte oder durch ein Absenken der Last auf die Aufnahmepunkte erfolgen.

Nach dem Übergeben der Last an das Bodenfahrzeug (S4) kann die Last transportiert werden (S5).

## Patentansprüche

1. Fahrerloses Bodenfahrzeug (10) zur Förderung von Lasten (11, 13) wie Fahrzeugkarosserien oder/und Fahrzeugteilen, umfassend
a) einen Fahrzeugkörper mit einer ersten Achse und einer zweiten Achse, wobei zumindest eine Achse antreibbar ist,
b) Aufnahmepunkte (24-30) zur Aufnahme einer Last (11, 13), wobei eine erste Anzahl an Aufnahmepunkten (24, 26) in einem ersten Bereich des Fahrzeugkörpers und eine zweite Anzahlt an Aufnahmepunkten in einem zweiten Bereich des Fahrzeugkörpers angeordnet ist,
**dadurch gekennzeichnet, dass**
c) der Abstand der ersten Anzahl an Aufnahmepunkten (24, 26) zu der zweiten Anzahl an Aufnahmepunkten (28, 30) verstellbar ist.

2. Bodenfahrzeug nach Anspruch 1, wobei der Fahrzeugkörper
a) einen ersten Fahrzeugkörper (12) mit der ersten Achse und einen zweiten Fahrzeugkörper (14) mit der zweiten Achse aufweist, wobei der erste Fahrzeugkörper (12) mit dem zweiten Fahrzeugkörper (14) über eine Kopplungsvorrichtung (16) verbunden ist, wobei
b) die erste Anzahl an Aufnahmepunkten (24, 26) an dem ersten Fahrzeugkörper (12) und die zweite Anzahl an Aufnahmepunkten (28, 30) an dem zweiten Fahrzeugkörper (14) angeordnet ist.

3. Bodenfahrzeug nach Anspruch 2, wobei die Verbindung zwischen dem ersten Fahrzeugkörper (12) und dem zweiten Fahrzeugkörper (14) im Betrieb starr ist.

4. Bodenfahrzeug nach Anspruch 2 oder 3, wobei der Abstand der ersten Anzahl an Aufnahmepunkten (24, 26) zu der zweiten Anzahl an Aufnahmepunkten (28, 30) durch eine Verstellbarkeit des Abstands des ersten Fahrzeugkörpers (12) zu dem zweiten Fahrzeugkörper (14) verstellbar ist.

5. Bodenfahrzeug nach Anspruch 4, wobei die Gesamtlänge oder/und die Gesamtbreite des Bodenfahrzeugs (10) bezüglich einer Förderrichtung (F) durch den Abstand des ersten Fahrzeugkörpers (12) von dem zweiten Fahrzeugkörper (14) bestimmt ist.

6. Bodenfahrzeug nach einem der vorhergehenden Ansprüche 2-5, wobei die Kopplungsvorrichtung (16) so verstellbar ausgestaltet ist, dass mittels eines Verstellens der Kopplungsvorrichtung (16) der Abstand zwischen dem ersten (12) und dem zweiten Fahrzeugkörper (14) verstellbar ist.

7. Bodenfahrzeug nach einem der vorhergehenden Ansprüche, wobei die Kopplungsvorrichtung (16) teleskopartig ineinander greifende Elemente (32, 34) oder/und scherenförmige Verstellelemente (2161) aufweist.

8. Bodenfahrzeug nach einem der vorhergehenden Ansprüche, wobei das Verstellen elektrisch, pneumatisch, mechanisch oder/und hydraulisch durchführbar ist und/oder das Verstellen des Abstands in einer Richtung oder/und in zwei.

9. Bodenfahrzeug nach einem der vorhergehenden Ansprüche, wobei zumindest ein Teil der ersten (24, 26) oder zweiten (28, 30) Anzahl an Aufnahmepunkten die Last (11, 13) hinsichtlich horizontaler Kräfte relativ zu dem Bodenfahrzeug festlegt.

10. Bodenfahrzeug nach Anspruch 9, wobei insgesamt mindestens zwei von mindestens drei Aufnahmepunkten für eine Lagefixierung der Last relativ zu dem Bodenfahrzeug und die restlichen Aufnahmepunkte für eine reine Stützfunktion ausgelegt sind.

11. Verfahren zum Transportieren einer Last wie einer Fahrzeugkarosserie oder/und Fahrzeugteilen mit einem fahrerlosen Bodenfahrzeug nach einem der vorhergehenden Ansprüche, mit den Schritten:
a) Bestimmen der Abmessungen der Last;
b) Anpassen des Abstands der Aufnahmepunkte des Bodenfahrzeugs an die Abmessungen der Last, sofern erforderlich;
c) Aufnehmen der Last.

## Claims

1. Driverless ground vehicle (10) for conveying loads (11, 13) such as vehicle bodies and/or vehicle parts, comprising
a) a vehicle body with a first axle and with a second axle, wherein at least one axle is driveable,
b) receiving points (24-30) for receiving a load (11, 13), wherein a first number of receiving points (24, 26) are arranged in a first region of the vehicle body and a second number of receiving points are arranged in a second region of the vehicle body,
**characterized in that**
c) the distance between the first number of receiving points (24, 26) and the second number of receiving points (28, 30) is adjustable.

2. Ground vehicle according to Claim 1, wherein the vehicle body
a) has a first vehicle body (12) with the first axle and a second vehicle body (14) with the second axle, wherein the first vehicle body (12) is connected to the second vehicle body (14) via a coupling apparatus (16), wherein
b) the first number of receiving points (24, 26) is arranged on the first vehicle body (12) and the second number of receiving points (28, 30) is arranged on the second vehicle body (14).

3. Ground vehicle according to Claim 2, wherein the connection between the first vehicle body (12) and the second vehicle body (14) is rigid during operation.

4. Ground vehicle according to Claim 2 or 3, wherein the distance between the first number of receiving points (24, 26) and the second number of receiving points (28, 30) is adjustable as a result of the distance between the first vehicle body (12) and the second vehicle body (14) being adjustable.

5. Ground vehicle according to Claim 4, wherein the total length and/or the total width of the ground vehicle (10) in relation to a conveying direction (F) is determined by the distance between the first vehicle body (12) and the second vehicle body (14).

6. Ground vehicle according to one of preceding Claims 2-5, wherein the coupling apparatus (16) is configured to be adjustable such that the distance between the first vehicle body (12) and the second vehicle body (14) is adjustable by means of an adjustment of the coupling apparatus (16).

7. Ground vehicle according to one of the preceding claims, wherein the coupling apparatus (16) has telescopically interengaging elements (32, 34) and/or scissors-like adjustment elements (2161).

8. Ground vehicle according to one of the preceding claims, wherein it is possible for the adjustment to be carried out electrically, pneumatically, mechanically and/or hydraulically and/or for the adjustment of the distance to be carried out in one direction and/or in two directions.

9. Ground vehicle according to one of the preceding claims, wherein at least some of the first (24, 26) or second (28, 30) number of receiving points fix the load (11, 13) relative to the ground vehicle with regard to horizontal forces.

10. Ground vehicle according to Claim 9, wherein altogether at least two of at least three receiving points are designed for positionally fixing the load relative to the ground vehicle, and the remaining receiving points are designed to provide purely a support function.

11. Method for transporting a load such as a vehicle body and/or vehicle parts using a driverless ground vehicle according to one of the preceding claims, comprising the steps of:
a) determining the dimensions of the load;
b) adapting the distance between the receiving points of the ground vehicle to the dimensions of the load, if necessary;
c) receiving the load.

## Revendications

1. Véhicule terrestre sans conducteur (10) pour le transport de charges (11, 13) telles que des carrosseries de véhicules ou/et des pièces de véhicules, comprenant
a) un corps de véhicule avec un premier essieu et un deuxième essieu, au moins un essieu pouvant être entraîné,
b) des points de réception (24-30) pour recevoir une charge (11, 13), un premier nombre de points de réception (24, 26) étant agencé dans une première zone du corps du véhicule et un deuxième nombre de points de réception étant agencé dans une deuxième zone du corps du véhicule, **caractérisé en ce que**
c) la distance entre le premier nombre de points de réception (24, 26) et le deuxième nombre de points de réception (28, 30) est réglable.

2. Véhicule terrestre selon la revendication 1, dans lequel le corps de véhicule
a) présente un premier corps de véhicule (12) avec le premier essieu et un deuxième corps de véhicule (14) avec le deuxième essieu, le premier corps de véhicule (12) étant relié au deuxième corps de véhicule (14) par l'intermédiaire d'un dispositif d'accouplement (16),
b) le premier nombre de points de réception (24, 26) étant agencé sur le premier corps de véhicule (12) et le deuxième nombre de points de réception (28, 30) étant agencé sur le deuxième corps de véhicule (14).

3. Véhicule terrestre selon la revendication 2, dans lequel la liaison entre le premier corps de véhicule (12) et le deuxième corps de véhicule (14) est rigide en fonctionnement.

4. Véhicule terrestre selon la revendication 2 ou 3, dans lequel la distance entre le premier nombre de points de réception (24, 26) et le deuxième nombre de points de réception (28, 30) est réglable par une faculté de réglage de la distance entre le premier corps de véhicule (12) et le deuxième corps de véhicule (14).

5. Véhicule terrestre selon la revendication 4, dans lequel la longueur totale ou/et la largeur totale du véhicule terrestre (10) par rapport à une direction de transport (F) est déterminée par la distance entre le premier corps de véhicule (12) et le deuxième corps de véhicule (14).

6. Véhicule terrestre selon l'une quelconque des revendications 2 à 5 précédentes, dans lequel le dispositif d'accouplement (16) est configuré sous forme réglable de telle sorte que la distance entre le premier (12) et le deuxième corps de véhicule (14) est réglable au moyen d'un réglage du dispositif d'accouplement (16).

7. Véhicule terrestre selon l'une quelconque des revendications précédentes, dans lequel le dispositif d'accouplement (16) présente des éléments (32, 34) s'engageant les uns dans les autres de manière télescopique ou/et des éléments de réglage (2161) en forme de ciseaux.

8. Véhicule terrestre selon l'une quelconque des revendications précédentes, dans lequel le réglage peut être réalisé de manière électrique, pneumatique, mécanique ou/et hydraulique et/ou le réglage de l'écartement est unidirectionnel ou/et bidirectionnel.

9. Véhicule terrestre selon l'une quelconque des revendications précédentes, dans lequel au moins une partie du premier (24, 26) ou du deuxième (28, 30) nombre de points de réception fixe la charge (11, 13) en termes de forces horizontales par rapport au véhicule terrestre.

10. Véhicule terrestre selon la revendication 9, dans lequel, au total, au moins deux des au moins trois points de réception sont conçus pour fixer la position de la charge par rapport au véhicule terrestre et les points de réception restants sont conçus pour une fonction de support uniquement.

11. Procédé de transport d'une charge telle qu'une carrosserie de véhicule ou/et des pièces de véhicule avec un véhicule terrestre sans conducteur selon l'une quelconque des revendications précédentes, comprenant les étapes suivantes :
a) la détermination des dimensions de la charge ;
b) l'adaptation de la distance entre les points de réception du véhicule terrestre aux dimensions de la charge, si nécessaire ;
c) la réception de la charge.
